# EUROPEAN PATENT APPLICATION

(11) **EP 4 475 504 A1**
(43) Date of publication of application: **11.12.2024**
(21) Application number: 22930593.3
(22) Date of filing: 08.11.2022
(51) Int. Cl.: H04L 41/04

(54) **METHOD FOR MANAGING BLOCKCHAIN NETWORK, AND RELATED DEVICE**

(30) Priority: 10.03.2022 CN 202210228191; 20.05.2022 CN 202210550637
(71) Applicant: Huawei Cloud Computing Technologies Co., Ltd., Gui'an New District, Guizhou 550025 (CN)
(72) Inventor: ZHANG, Xiaotian, Guizhou 550025 (CN); ZHANG, Ziyi, Guizhou 550025 (CN); QU, Qiang, Guizhou 550025 (CN)
(74) Representative: Gill Jennings & Every LLP
(86) International application number: PCT/CN2022/130584
(87) International publication number: WO 2023/168970

(57) **Abstract**

This application provides a blockchain network management method, including: receiving a user registration request, where the user registration request includes a user type of a user, and the user type is determined based on a deployment manner of a blockchain network managed by the user; registering a corresponding organization for the user based on the user registration request, where the organization is associated with resource space corresponding to the user type; and invoking a processing interface of the resource space to execute corresponding service logic. In the method, an organization with a consistent structure is registered for an on-cloud user or an off-cloud user, and the organization is bound to resource space of a corresponding user type, to perform service processing through a processing interface of the corresponding resource space. In this way, blockchain networks deployed on and off the cloud can be managed in a unified manner, and blockchain networks deployed in different manners can be operated or operated and maintained in a centralized manner, thereby reducing difficulty and costs of operation and maintenance.

## Description

This application claims priorities to Chinese Patent Application No. 202210228191.1, filed with the China National Intellectual Property Administration on March 10, 2022 and entitled "BLOCKCHAIN MANAGEMENT METHOD, APPARATUS, SERVER, AND STORAGE MEDIUM", and to Chinese Patent Application No. 202210550637.2, filed with the China National Intellectual Property Administration on May 20, 2022 and entitled "BLOCKCHAIN NETWORK MANAGEMENT METHOD AND RELATED DEVICE", both of which are incorporated herein by reference in their entireties.

### TECHNICAL FIELD

This application relates to the field of blockchain technologies, and in particular, to a blockchain network management method, a platform, a computer cluster, a computer-readable storage medium, and a computer program product.

### BACKGROUND

Continuous development of information technologies drive more enterprises, institutions, and organizations to put their services online. In this way, a user can handle services online more conveniently. Some services often require multi-department collaboration. For example, to apply for a residence permit for an employee, an enterprise usually needs to submit a tax payment certificate provided by a tax bureau and a legal and stable residence certificate provided by a housing management bureau (such as a rental contract recorded by the housing management bureau) to a human resources and social security department.

Because data transfer between these departments usually requires a large quantity of manual approvals, data inconsistency, information leakage, and the like may occur during the data transfer, and timeliness of the data transfer is poor, service requirements cannot be met. With emergence of a blockchain technology, a sharing mode of a blockchain is used for services involving a plurality of departments and complex processes, to effectively implement cross-department and cross-region data maintenance and utilization, promote service digital reform, and implement intelligent governance.

Currently, in a related technology, a service system of a service is established through a server and a blockchain network. The blockchain network includes a plurality of nodes, and the plurality of nodes in the blockchain network may be nodes managed by different departments. Specifically, the server may receive a request from a client (which may also be referred to as a client), perform classification and approval based on the request, and upload data exchanged with the client to the blockchain network for storage.

However, the server lacks capability of managing a blockchain network deployed on a cloud (also referred to as a cloud chain) and a blockchain network deployed off the cloud (also referred to as an offline scattered chain) in a unified manner, and therefore cannot implement centralized operation or operation and maintenance thereon. Consequently, service requirements cannot be met.

### SUMMARY

This application provides a blockchain network management method, to register an organization with a consistent structure for users of different user types (for example, an on-cloud user or an off-cloud user), and associate the organization with resource space (for example, tenant space on a cloud or a physical resource set off the cloud) corresponding to the user type. For blockchain networks deployed in different resource space, processing interfaces of the resource space are uniformly invoked to execute service logic corresponding to the processing interfaces. In this way, blockchain networks deployed on and off the cloud can be managed in a unified manner, and blockchain networks deployed in different manners can be operated or operated and maintained in a centralized manner, thereby reducing difficulty and costs of operation or operation and maintenance. This application further provides a blockchain network management platform, a computer cluster, a computer-readable storage medium, and a computer program product that correspond to the foregoing method.

According to a first aspect, embodiments of this application provide a blockchain network management method. The method may be performed by a blockchain network management platform (management platform for short). The management platform may be a software system. The software system is deployed in a computer cluster. The computer cluster runs program code of the software system, to perform the blockchain network management method in embodiments of this application. In some embodiments, the management platform may also be a hardware system having a blockchain network management function, and the hardware system may be one or more computers in a computer cluster.

Specifically, the management platform receives a user registration request, where the user registration request includes a user type of a user, and the user type is determined based on a deployment manner of a blockchain network managed by the user. For example, the user type includes an on-cloud user or an off-cloud user. The management platform registers a corresponding organization for the user based on the user registration request, where the organization is associated with resource space corresponding to the user type. The management platform may invoke a processing interface of the resource space to execute service logic corresponding to the processing interface.

In this method, the management platform registers an organization with a consistent structure for users of different user types (for example, the on-cloud user or the off-cloud user), and associates the organization with the resource space (for example, tenant space on a cloud or a physical resource set off the cloud) corresponding to the user type. For blockchain networks deployed in different resource space, the management platform may uniformly invoke processing interfaces of the resource space, to execute service logic corresponding to the processing interfaces. In this way, blockchain networks deployed on and off the cloud can be managed in a unified manner, and blockchain networks deployed in different manners can be operated or operated and maintained in a centralized manner, thereby reducing difficulty and costs of operation or operation and maintenance.

In some possible implementations, the user type includes an on-cloud user, and resource space corresponding to the on-cloud user includes tenant space. In this way, blockchain networks deployed on the cloud can be managed in a unified manner, to meet a requirement for centralized operation or operation and maintenance of the blockchain networks deployed on the cloud.

In some possible implementations, the management platform may invoke a service chain creation interface of the tenant space to create a service chain. In this way, one-click chain creation can be implemented, user operations are reduced, efficiency of establishing and deploying the blockchain network is improved, and user experience is improved.

In some possible implementations, the management platform may create, based on a service requirement, one or more service chains that meet the service requirement. For example, the management platform may create a plurality of service chains, and at least two of the plurality of service chains have a shared node. For another example, the management platform may create a plurality of service chains, and the plurality of service chains do not have a shared node. The management platform may also create a single service chain, and nodes of the service chain are located in same tenant space.

In the method, the management platform may select a corresponding chain creation mode to create a service chain based on requirements of a service on security, performance, and costs, to adapt to different service scenarios and have high availability.

In some possible implementations, the management platform may obtain a chain creation mode parameter, and create one or more service chains based on the chain creation mode parameter. This method fully encapsulates a bottom-layer chain creation process, shields a kernel structure difference, implements fast service chain creation, and reduces operation and maintenance costs.

In some possible implementations, the chain creation mode parameter is configured based on a trust relationship between the users. For users with a weak trust relationship, when the users function as consortium participants, the users can map the consortium participants to different tenant space to form a consortium. A chain creation manner of the consortium may include: using a same blockchain instance/organization/node as an inviter to establish a multi-chain consortium, to implement a multi-subchain consortium mode in which a resource can be reused; and using different blockchain instances/organizations/nodes of a same tenant as an inviter to establish a plurality of single-chain consortiums, to implement a single-chain isolation consortium mode in which a resource cannot be reused. Users with a trust relationship can be deployed in the same tenant space. The participants are mapped to organizations in a private chain and nodes with a same owner. A private chain is established between the participants. In this way, a balance between resource utilization and security can be achieved.

In some possible implementations, the user type includes an off-cloud user, and resource space corresponding to the off-cloud user includes a physical resource set. In this way, blockchain networks deployed off the cloud can be managed in a unified manner, to meet a requirement for centralized operation or operation and maintenance of the blockchain networks deployed off the cloud.

In some possible implementations, the management platform may invoke a consortium creation interface of the resource space to create a blockchain node in the resource space, to create a consortium. Alternatively, the management platform may invoke a consortium joining interface of the resource space to create a blockchain node in the resource space, to join a consortium. Alternatively, the management platform may invoke a consortium exit interface of the resource space to reclaim a blockchain node from the resource space, to exit a consortium. Alternatively, the management platform may invoke a consortium deletion interface of the resource space to reclaim a blockchain node in the resource space, to delete a consortium.

In this method, the management platform supports creating, joining, exiting, or deleting a consortium, to implement flexible adjustment of the consortium and dynamically meet service requirements.

In some possible implementations, the resource space may be from a heterogeneous blockchain platform, for example, blockchain platforms with different architectures or kernels. Correspondingly, the management platform may further receive a platform registration request, and register a standard interface of the heterogeneous blockchain platform through a platform registration interface.

In this method, the management platform registers the standard interface of the heterogeneous blockchain platform, to invoke a bottom-layer heterogeneous blockchain platform through the standard interface, to implement unified management of heterogeneous blockchain platforms, thereby resolving a problem that the heterogeneous blockchain platforms cannot be managed in a one-stop manner.

In some possible implementations, the resource space may be from the heterogeneous blockchain platform, and the heterogeneous blockchain platform has the management plane interface. The management platform may receive the platform registration request, and then obtain the standard interface corresponding to the management plane interface, to register the standard interface of the heterogeneous blockchain platform.

For the heterogeneous blockchain platform that has the management plane interface, the standard interface corresponding to the management plane interface can be obtained through interface mapping, and there is no need for secondary opening. In this way, the heterogeneous blockchain platform can be managed in a unified manner. This avoids repeated establishment and long-term service reconstruction of the blockchain platform. Services and resources of the user can be maintained, scheduled, and monitored in a unified manner.

In some possible implementations, the blockchain network management platform provides a service interface. The management platform may execute corresponding service logic in response to invocation of the service interface by a service server.

In this method, bottom-layer service logic is shielded, and one-stop operation or operation and maintenance of a blockchain network of the user is implemented based on a unified service interface, thereby reducing operation or operation and maintenance costs.

According to a second aspect, embodiments of this application provide a blockchain network management platform. The platform includes:
a communication module, configured to receive a user registration request, where the user registration request includes a user type of a user, and the user type is determined based on a deployment manner of a blockchain network managed by the user;
a registration module, configured to register a corresponding organization for the user based on the user registration request, where the organization is associated with resource space corresponding to the user type; and
an execution module, configured to invoke a processing interface of the resource space to execute corresponding service logic.

In some possible implementations, the user type includes an on-cloud user, and resource space corresponding to the on-cloud user includes tenant space.

In some possible implementations, the execution module is specifically configured to:
invoke a service chain creation interface of the tenant space to create a service chain.

In some possible implementations, the execution module is specifically configured to:
create a plurality of service chains, where at least two of the plurality of service chains have a shared node; or
create a plurality of service chains, where the plurality of service chains do not have a shared node; or
create a single service chain, where nodes of the service chain are located in same tenant space.

In some possible implementations, the execution module is specifically configured to:
obtain a chain creation mode parameter; and
create one or more service chains based on the chain creation mode parameter.

In some possible implementations, the chain creation mode parameter is configured based on a trust relationship between the users.

In some possible implementations, the user type includes an off-cloud user, and resource space corresponding to the off-cloud user includes a physical resource set.

In some possible implementations, the execution module is specifically configured to:
invoke a consortium creation interface of the resource space to create a blockchain node in the resource space, to create a consortium; or
invoke a consortium joining interface of the resource space to create a blockchain node in the resource space, to join a consortium; or
invoke a consortium exit interface of the resource space to reclaim a blockchain node from the resource space, to exit a consortium; or
invoke a consortium deletion interface of the resource space to reclaim a blockchain node from the resource space, to delete a consortium.

In some possible implementations, the resource space is from a heterogeneous blockchain platform, and the communication module is further configured to:
receive a platform registration request; and
the registration module is further configured to:
   register a standard interface of the heterogeneous blockchain platform through a platform registration interface.

In some possible implementations, the resource space is from a heterogeneous blockchain platform, the heterogeneous blockchain platform has a management plane interface, and the communication module is further configured to:
receive a platform registration request; and
the registration module is further configured to:
   obtain a standard interface corresponding to the management plane interface, to register a standard interface of the heterogeneous blockchain platform.

In some possible implementations, the blockchain network management platform provides a service interface, and the execution module is specifically configured to:
execute the corresponding service logic in response to invocation of the service interface by a service server.

According to a third aspect, this application provides a computer cluster. The computer cluster includes at least one computer, and the at least one computer includes at least one processor and at least one memory. The at least one processor and the at least one memory communicate with each other. The at least one processor is configured to execute instructions stored in the at least one memory, so that a computer or a computer cluster performs the blockchain network management method according to any one of the first aspect or the implementations of the first aspect.

According to a fourth aspect, this application provides a computer-readable storage medium, where the computer-readable storage medium stores instructions, and the instructions instruct a computer or a computer cluster to perform the blockchain network management method according to any one of the first aspect or the implementations of the first aspect.

According to a fifth aspect, this application provides a computer program product including instructions. When the computer program product runs on a computer or a computer cluster, the computer or the computer cluster performs the blockchain network management method according to any one of the first aspect or the implementations of the first aspect.

Based on the implementations provided in the foregoing aspects, this application may further combine technologies in this application to provide more implementations.

### BRIEF DESCRIPTION OF DRAWINGS

To describe technical methods in embodiments of this application more clearly, the following briefly describes the accompanying drawings for describing embodiments.
FIG. 1 is an architectural diagram of a data management system according to an embodiment of this application;
FIG. 2A and FIG. 2B are an architectural diagram of a data management system according to an embodiment of this application;
FIG. 3 is a flowchart of a blockchain network management method according to an embodiment of this application;
FIG. 4 is a flowchart of a blockchain network management method according to an embodiment of this application;
FIG. 5 is a diagram of a chain creation mode of an on-cloud blockchain network according to an embodiment of this application;
FIG. 6A and FIG. 6B are a flowchart of a blockchain network management method according to an embodiment of this application;
FIG. 7A and FIG. 7B are a flowchart of a blockchain network management method in a government scenario according to an embodiment of this application;
FIG. 8 is a diagram of a structure of a blockchain network management platform according to an embodiment of this application; and
FIG. 9 is a diagram of a structure of a computer cluster according to an embodiment of this application.

### DESCRIPTION OF EMBODIMENTS

The terms "first" and "second" in embodiments of this application are merely intended for a purpose of description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

A blockchain network is a decentralized network including a plurality of nodes. The nodes in the blockchain network are connected in a point-to-point manner to form a peer-to-peer (Peer-to-Peer, P2P) network. In the peer-to-peer network, the nodes do not have a centralized service and a hierarchical structure, and the nodes are equivalent. Therefore, the nodes in the network are also referred to as peer nodes, that is, peer nodes.

The blockchain network is used to provide a distributed ledger and a smart contract (smart contract) service for an application program (which may be referred to as an application for short). Transaction logic is defined in the smart contract. The smart contract is used to generate transactions. These transactions are distributed to each peer node in the blockchain network. Each peer node records these transactions on a ledger copy of the peer node, and the ledger copy cannot be tampered with. The transaction may be usually recorded in a form of a block, different transactions may be recorded in different blocks, and the different blocks may be connected to form a blockchain. Therefore, the ledger copy may be a blockchain.

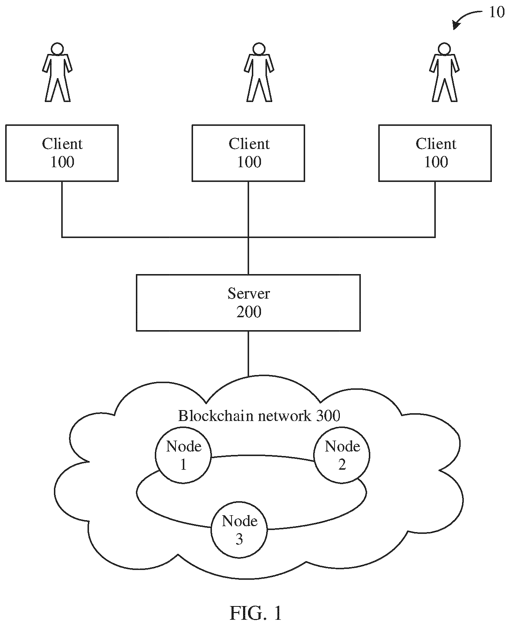

For a service that requires multi-party collaboration, the industry proposes a data sharing mode in which data is shared over the blockchain network. Specifically, requirement analysis is performed on a service, and service content that needs to be carried is determined, to establish a client (also referred to as a user end), a server, and the blockchain network. Refer to an architectural diagram of a data management system shown in FIG. 1. In a system 10, a client 100 is connected to a server 200, and the server 200 is connected to a blockchain network 300. The blockchain network 300 includes a plurality of nodes 302, for example, nodes 302 managed by different users. After receiving a request from the client 100, the server 200 may perform classification processing and approval. The server 200 uploads data exchanged between the client 100 and the server 200 to the blockchain network 300 in real time for storage. This resolves a problem that a large amount of manual approval is required in a conventional data sharing mode and data inconsistency caused during data replication and transmission. Through cross-department and cross-region data maintenance and utilization, digital transformation of services is promoted and intelligent governance is implemented.

In some scenarios, the client 100 needs to use a plurality of blockchain networks 300. For example, the client 100 needs to use a blockchain network 300 (also referred to as a cloud chain) deployed on a cloud to share large-capacity information, and use a blockchain network 300 (also referred to as an offline chain) deployed off the cloud to share information having a high security requirement. However, for the blockchain network 300 deployed on the cloud and the blockchain network 300 deployed off the cloud, the server 200 lacks a unified management capability. It is difficult to implement centralized operation or operation and maintenance, and it is difficult to meet the service requirement.

In view of this, embodiments of this application provide a blockchain network management method. The method may be performed by a blockchain network management platform (management platform for short). The management platform may be a software system. The software system is deployed in a computer cluster. The computer cluster runs program code of the software system, to perform the blockchain network management method in embodiments of this application. In some embodiments, the management platform may also be a hardware system having a blockchain network management function, and the hardware system may be one or more computers in a computer cluster. For ease of description, the following uses an example in which the management platform is a software system for description.

Specifically, the management platform may receive a user registration request, where the user registration request includes a user type of a user, and the user type is determined based on a deployment manner of a blockchain network managed by the user. For example, the user type includes an on-cloud user or an off-cloud user. The on-cloud user is a user who connects a blockchain network deployed on the cloud to the management platform, for example, may be a tenant of the cloud platform. The off-cloud user is a user who connects a blockchain network deployed off the cloud to the management platform. The management platform registers a corresponding organization for the user based on the user registration request, where the organization is associated with resource space corresponding to the user type. The management platform may invoke a processing interface of the resource space to execute service logic corresponding to the processing interface.

In this method, the management platform registers an organization with a consistent structure for users of different user types (for example, the on-cloud user or the off-cloud user), and associates the organization with the resource space (for example, tenant space on a cloud or a physical resource set off the cloud) corresponding to the user type. For blockchain networks deployed in different resource space, the management platform may uniformly invoke processing interfaces of the resource space, to execute service logic corresponding to the processing interfaces. In this way, blockchain networks deployed on and off the cloud can be managed in a unified manner, and blockchain networks deployed in different manners can be operated or operated and maintained in a centralized manner, thereby reducing difficulty and costs of operation or operation and maintenance.

The blockchain network management method and the management platform in embodiments of this application may be applied to different industries or fields. For example, the management platform may be a blockchain network management platform for financial industry. By performing the blockchain network management method in embodiments of this application, blockchain networks of different financial organizations can be managed in a unified manner. For another example, the management platform may be a blockchain network management platform for government affairs. By performing the blockchain network management method in embodiments of this application, blockchain networks of different organizations or departments (such as a tax bureau, a housing administration bureau, and a human resources and social security department) may be managed in a unified manner.

According to the method, a user can centrally manage all blockchain networks that the user accesses to the management platform, and monitor a service of the user. In addition, the method may provide functions such as identity authentication management, service management, credential conversion, data collection and presentation, contract management, an application repository, and an internal application programming interface (application programming interface, API) gateway. Based on the foregoing functions, a service process can be simplified, so that the user (for example, an administrator) can easily manage a bottom-layer blockchain network, and deploy a consortium and a smart contract with one click.

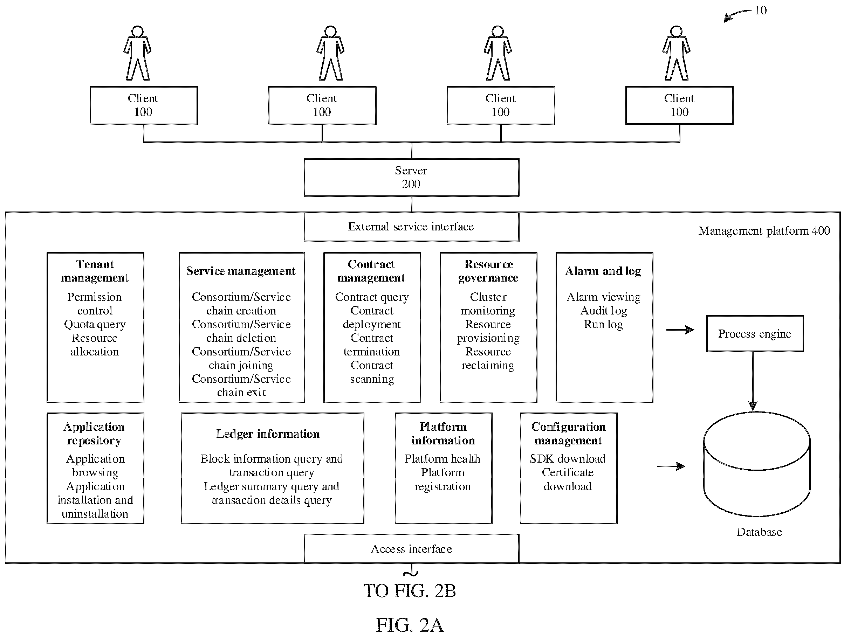

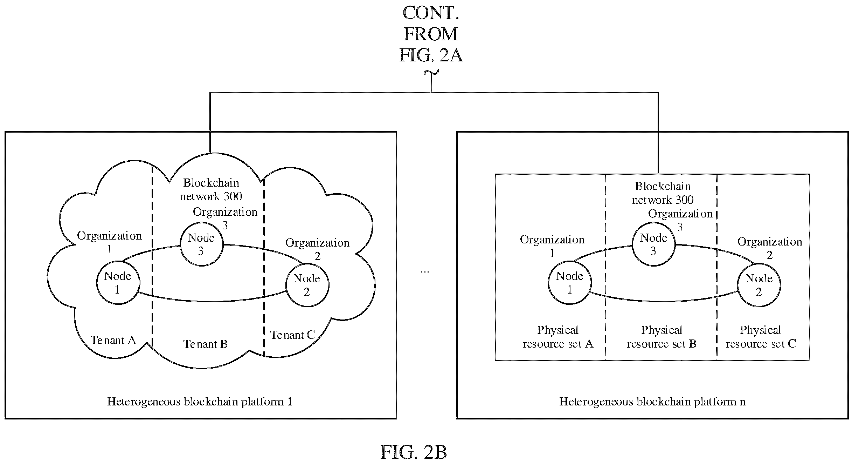

To make the technical solutions of this application clearer and easier to understand, the following describes an architecture of a system in embodiments of this application with reference to the accompanying drawings. Refer to an architectural diagram of another data management system shown in FIG. 2A and FIG. 2B. Based on the data management system 10 shown in FIG. 1, a data management system 10 shown in FIG. 2A and FIG. 2B further includes a blockchain network management platform 400. The management platform 400 is separately connected to the server 200 and the blockchain network 300.

The blockchain network 300 may be established based on a blockchain platform. The blockchain platform is a platform used to establish the blockchain network 300 and manage the blockchain network 300 and a blockchain copy (distributed ledger) in the blockchain network 300. Blockchain platforms can be classified into different types based on different kernels of the blockchain platforms. For example, the blockchain platforms may be classified into different types such as Fabric, Quorum, and Etherium based on the kernels. The foregoing different types of blockchain platforms are also referred to as heterogeneous blockchain platforms. A blockchain network established based on the different types of blockchain platforms is referred to as a heterogeneous blockchain network, and may be referred to as a heterogeneous chain for short. It should be noted that each blockchain network 300 carries at least one type of service logic. Therefore, the blockchain network 300 may also be referred to as a service chain.

The following describes functions of the client 100, the server 200, the blockchain network 300, and the management platform 400 in the data management system 10.

The client 100 is configured to send a user registration instruction. The user registration instruction includes a user type of a user. The user type may be determined based on a deployment manner of the blockchain network 300 managed by the user. For example, when the blockchain network 300 is deployed in an on-cloud manner, a user type is an on-cloud user. When the blockchain network 300 is deployed in an off-cloud manner, a user type is an off-cloud user.

During specific implementation, the client 100 is configured to provide a registration interface for the user. The registration interface may be a graphical user interface (graphical user interface, GUI) or a command user interface (command user interface, CUI). The user may trigger a user registration operation through the registration interface. The client 100 generates the user registration instruction in response to the user registration operation, and then sends the user registration instruction.

The server 200 is configured to receive the user registration instruction, and then invoke a user registration interface based on the user registration instruction, to send a user registration request to the management platform 400, to implement user registration. The user registration request includes the user type of the user. In some possible implementations, the server 200 is further configured to perform procedure approval, service chain creation, and service chain operation or operation and maintenance. The server 200 implements service chain creation and service chain operation or operation and maintenance through the management platform 400.

The management platform 400 is configured to: receive the user registration request; register a corresponding organization for the user based on the user registration request, where the organization is associated with resource space corresponding to the user type; and invoke a processing interface of the resource space to execute corresponding service logic. The processing interface of the resource space may include one or more of a consortium creation interface, a consortium joining interface, a consortium exit interface, or a consortium deletion interface. The management platform 400 may invoke the foregoing interfaces to create a consortium, join a consortium, exit a consortium, or delete a consortium.

The blockchain network 300 is configured to access the management platform 400, to facilitate unified management by the user. The blockchain platform on which the blockchain network 300 depends may access the management platform 400 through a unified access interface provided by the management platform 400 for different blockchain platforms, so that the blockchain network 300 can access the management platform 400. Different blockchain networks 300 may form a consortium (for example, a consortium chain network) by performing operations such as creating a consortium and joining a consortium. Data may be shared between blockchain networks 300 in a same consortium, to meet a service requirement.

In the system 10, the management platform 400 may provide a unified service interface for different blockchain platforms. The service interface is specifically an external service interface. A user (for example, an administrator) accessing the blockchain network 300 of the management platform 400 may invoke the external service interface through a client, to execute corresponding service logic. The following uses a client as an example. A user may trigger a service operation by using a control of an external service interface displayed by the client 100. The client 100 invokes the external service interface to generate a service request in response to the service operation. The server 200 receives the service request, and sends the service request to the management platform 400. The management platform 300 receives the service request, and may schedule the bottom-layer blockchain platform based on the service request. The management platform 300 may invoke a corresponding bottom-layer platform interface based on a user type and a blockchain platform type in the service request, to schedule the blockchain platform (specifically, a service chain on the blockchain platform).

In some possible implementations, the management platform 400 may further set a process engine. The process engine can parse the service request to obtain a corresponding task. The process engine can then automatically execute one or more of a blockchain network creation task, an invitation task, a notification task, or an approval task in parallel or serial. After the task is delivered, the user can obtain a processing progress of a current service operation through a task progress query interface.

It should be noted that the management platform 400 may be deployed on a cluster of tenant space on the cloud platform. The management platform 400 may further configure a database for storing user data. The process engine in the management platform 400 may start some scheduled tasks to poll consortiums managed in the database and update the user data such as monitoring data and status data, to uniformly display the consortiums managed by the management platform 400 to the user when the user queries.

Further, the management platform 400 maintains modules such as tenant management, service management, and contract management, to implement tenant management functions such as permission control, quota query, and resource allocation, service management functions such as creation, deletion, joining, or exiting of a consortium/service chain, and contract management functions such as contract query, contract deployment, contract termination, and contract scanning.

In addition, the management platform 400 further maintains modules such as resource governance, an alarm log, an application repository, ledger information, platform information, and configuration management, to implement resource governance functions such as cluster monitoring, and resource (node resource and application resource) provisioning or reclaiming, alarm and log management functions such as alarm viewing, audit log viewing, and run log viewing, application management functions such as application browsing, installation, and uninstallation, ledger information management functions such as block information query, transaction query, ledger summary query, and transaction details query, platform information management functions such as platform health status query and platform registration information, and configuration management functions such as software development toolkit (software developing toolkit, SDK) download and certificate download. Application installation may be starting a corresponding function container in a cluster, to provide a corresponding capability, for example, a capability like formal verification of a smart contract. Formal verification is used to prove that a smart contract does not have a defect or meets one or more attributes.

The foregoing describes an architecture of the data management system 10. The following describes a blockchain network management method in embodiments of this application with reference to the accompanying drawings.

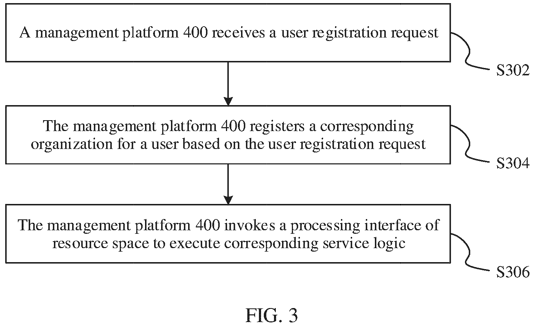

Refer to a flowchart of a blockchain network management method shown in FIG. 3. The method includes the following steps.

S302: A management platform 400 receives a user registration request.

The user registration request includes a user type of a user. The user type may be determined based on a deployment manner of a blockchain network 300 managed by the user. Specifically, the user type may include different types such as an on-cloud user or an off-cloud user. When the blockchain network 300 managed by the user is deployed in an on-cloud (deployed on a cloud platform) manner, the user is the on-cloud user. The on-cloud uses may be a tenant of the cloud platform. When the blockchain network 300 managed by the user is deployed in an off-cloud manner, the user is the off-cloud user.

In some possible implementations, the management platform 400 may receive the user registration request sent by a server 200. Specifically, a client 100 may load code of a registration interface from the server 200, to present the registration interface to the user. The registration interface may include a user registration control. The user may trigger a user registration operation through the registration control. The client generates a user registration instruction in response to the user registration operation, and then sends the user registration instruction to the server 200. The server 200 may receive the user registration instruction, and then invoke a user registration interface to send the user registration request to the management platform 400, to implement user registration.

In consideration of security, the server 200 may further support procedure approval for user registration. Procedure approval may be automatic approval. For example, the server 200 may perform automatic approval based on preset approval logic. In this way, a large amount of manual approval can be reduced, efficiency can be improved, and costs can be reduced. After approval is passed, the server 200 may send the user registration request to the management platform 400.

Further, when the user triggers the user registration operation, the blockchain network 300 managed by the user may be a deployed blockchain network 300, or may be a to-be-deployed blockchain network 300. When the blockchain network 300 is the to-be-deployed blockchain network 300, a deployment manner of the blockchain network 300 may be determined based on a blockchain platform, to determine the user type. For example, when the user deploys the blockchain network 300 on a blockchain platform of a cloud service provider, the user type of the user is the on-cloud user. For another example, when the user deploys the blockchain network 300 on a blockchain platform of a local data center, the user type of the user is the off-cloud user. In other words, in embodiments of this application, the existing blockchain network 300 may be managed. For example, the existing blockchain network may be added to a consortium, or may first become a consortium participant, and then a corresponding blockchain network 300 is established or deployed.

S304: The management platform 400 registers a corresponding organization for the user based on the user registration request.

The organization is a data structure that represents a group to which the user belongs. The group can be a company, an organization (such as an institution), an association, a department (such as a government department), or the like to which the user belongs. The organization is associated with the resource space corresponding to the user type. For example, when a user is the on-cloud user, the organization may be associated with tenant space on the cloud. The tenant space may be tenant space corresponding to a tenant identifier (identifier, ID) uploaded by the on-cloud user. For another example, when the user is the off-cloud user, the organization may be associated with a physical resource set. The physical resource set includes one or more physical resources. The physical resource may be a node resource. The physical resource set associated with the organization may be a physical resource identified by physical resource information uploaded by the user. The physical resource information includes an address of a node, for example, an Internet Protocol (Internet Protocol, IP) address of the node. Further, the physical resource information further includes a port number of the node and the like.

The organization includes an organization identifier (which may be an organization code and is denoted as OrgCode), a tenant identifier (TenantID), and physical resource information (which is specifically a node list and is denoted as NodeList). The organization identifier is a unique identifier allocated by the management platform 400, and a data type of the organization identifier may be a character string string. A data type of the physical resource information may be an array, which is specifically an array of node information and is denoted as []Node.

Further, refer to a data structure of the organization shown in Table 1. The organization may further include one or more of a tenant name (TenantName), a project identifier (ProjectID), a project name (ProjectName), an access key (access key, AK), a security key (secret key, SK), a token (Token), and a certificate. The certificate includes a transport layer security protocol (transport layer security, TLS) certificate.

**Table 1 Data structure of an organization**

| Field included in an organization | Data type | Field description |
|---|---|---|
| TenantID | string | Tenant ID |
| TenantName | string | Tenant name |
| ProjectID | string | Project identifier |
| ProjectName | string | Project name |
| OrgCode | string | Organization name |
| AK | string | Access key |
| SK | string | Security key |
| Token | string | Token |
| TLSCert | Cert | Certificate |
| NodeList | []Node | Physical resource information, including an IP address a port number |

The TLS certificate may be denoted as TlsCert, and a data type of the certificate is Cert. Data types of all fields except TLSCert and NodeList in the organization may be string.

In embodiments of this application, for users of different user types, the management platform 400 may register an organization with a unified format for the user based on the user registration request.

Refer to Table 1. When the user type is the on-cloud user, the management platform 400 registers a corresponding organization for the user, and a tenant ID in the organization is a tenant ID entered by the user. Further, the tenant name in the organization is a tenant name corresponding to the tenant ID entered by the user. NodeList in the organization can be left blank or set to a default value.

When the user type is the off-cloud user, the management platform 400 registers a corresponding organization for the user. A tenant ID and a tenant name in the organization may be empty or a default value. NodeList in the organization may be an array entered by the user. The array is an array of node information, and the node information includes an IP address and a port number of a node. Further, TLSCert in the organization is a certificate entered by the user.

The management platform 400 allocates an organization identifier to the organization corresponding to the user, and stores the organization in a back-end database, to abstract the user as a consortium participant, thereby implementing organization registration.

S306: The management platform 400 invokes a processing interface of the resource space to execute corresponding service logic.

The processing interface of the resource space includes a consortium creation interface, a consortium joining interface, a consortium exit interface, or a consortium deletion interface of the resource space. The consortium creation interface is used to create a consortium. The user (creator) who creates the consortium can create the consortium. The consortium joining interface is used to join the consortium, specifically, join the consortium created by the creator. The creator may invite another user to join the consortium created by the creator. The consortium exit interface is used to exit a consortium. The creator or the another user can exit the consortium. This consortium deletion interface is used to delete a consortium. Generally, the creator can trigger an operation of deleting the consortium. In some possible implementations, the another user may also trigger the operation of deleting the consortium

In some possible implementations, the management platform 400 may invoke a consortium creation interface of the resource space to create a blockchain node in the resource space, to create a consortium. Alternatively, the management platform 400 may invoke a consortium joining interface of the resource space to create a blockchain node in the resource space, to join a consortium. In some embodiments, the management platform 400 may invoke a consortium exit interface of the resource space to reclaim a blockchain node from the resource space, to exit a consortium, or invoke a consortium deletion interface of the resource space to reclaim a blockchain node from the resource space, to delete a consortium.

When invoking the processing interface of the resource space, the management platform 400 may invoke interfaces in different forms based on an organization type (user type). For example, when the organization type is an on-cloud organization and the user is an on-cloud user, the management platform 400 may invoke the processing interface of the resource space based on AK/SK. For another example, when the organization type is an off-cloud organization and the user is an off-cloud user, the management platform 400 may invoke the processing interface of the resource space based on TLSCert.

In some possible implementations, the management platform 400 may also invoke the consortium creation interface of the resource space, to create a consortium based on the blockchain network 300 that already exists in the resource space. Similarly, the management platform 400 may invoke the consortium joining interface of the resource space, to enable an existing blockchain network 300 in the resource space to join the consortium. The management platform 400 may invoke the consortium exit interface of the resource space, and reclaim an existing node resource of the blockchain network 300 in the resource space, to exit the consortium. In some embodiments, the management platform 400 may invoke the consortium deletion interface of the resource space, and reclaim a node resource of the existing blockchain network 300 in the resource space of each participant, to delete the consortium.

Based on the foregoing content description, embodiments of this application provide a blockchain network management method. In this method, an organization with a unified data structure is registered for different user types, and the organization is associated with the resource space corresponding to the user type. For blockchain networks deployed in different resource space, processing interfaces of the resource space may be uniformly invoked to execute service logic corresponding to the processing interfaces. In this way, a blockchain network deployed on a cloud and a blockchain network deployed off the cloud are managed in a unified manner, and the blockchain networks deployed in different deployment manners can be operated or operated and maintained in a centralized manner, thereby reducing operation or operation and maintenance difficulty and reducing operation or operation and maintenance costs. Further, the method may further provide a management capability of an existing blockchain network (for example, a service chain) and a unified management capability of a heterogeneous chain, thereby improving availability.

The following describes the blockchain network management method in embodiments of this application by using creating a consortium as an example.

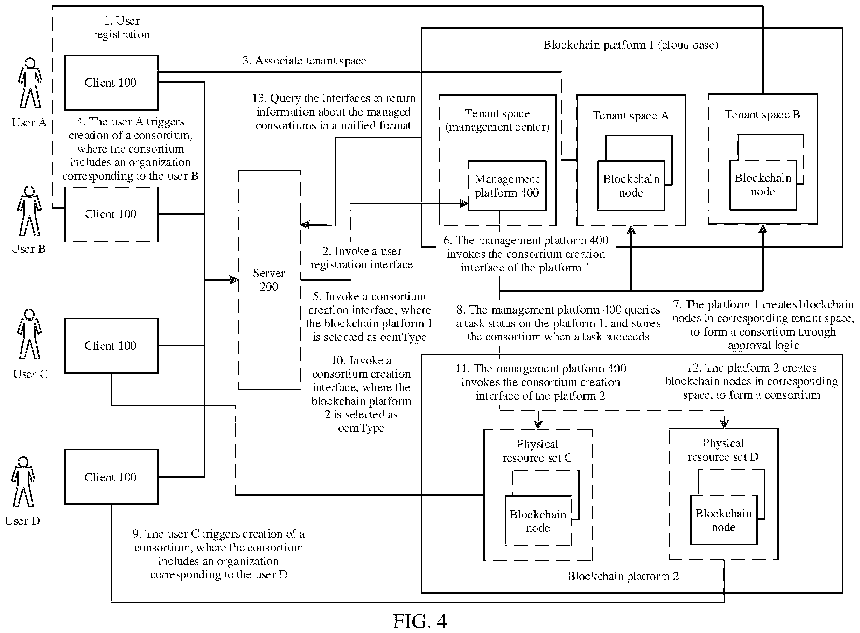

Refer to a flowchart of a blockchain network management method shown in FIG. 4. The method includes the following steps.

Step 1: A client 100 generates a user registration instruction in response to a user registration operation triggered by a user A, a user B, a user C, or a user D.

Step 2: A server 200 receives the user registration instruction sent by the client 100, invokes a user registration interface, and sends a user registration request to a management platform 400.

Step 3: The management platform 400 registers an organization for a user based on the user registration request, and associates the organization with tenant space corresponding to a tenant ID entered by the user.

The management platform 400 may be deployed in tenant space that is separately allocated by a default cloud foundation to a management center for use, and the tenant space is not used for a service purpose. If there is no special requirement, the management platform 400 may not manage another blockchain platform, and only use a default blockchain platform, for example, a blockchain platform 1 shown in FIG. 4.

That the management platform 400 associates the organization with the tenant space corresponding to the tenant ID entered by the user may be that the management platform binds the organization to the tenant space, to register information about the resource space with the management platform 400. It should be noted that resource space such as the tenant space cannot be reused. That is, the resource space such as the tenant space is usually bound to one organization, and is not repeatedly bound.

Step 4: The client 100 generates a consortium creation instruction in response to a consortium creation operation triggered by the user A, and sends the consortium creation instruction to the server 200.

The consortium creation instruction includes a user identifier of the user B, and the consortium creation instruction is used to create a consortium in which an organization corresponding to the user A and an organization corresponding to the user B participate as consortium participants.

Step 5: The server 200 invokes a consortium creation interface of the management platform 400, and sends a consortium creation request to the management platform 400.

A consortium creation interface of the management platform 400 is a standard interface. An interface parameter of the consortium creation interface includes a platform type, which is denoted as oemType. In the example in FIG. 4, oemType may be the blockchain platform 1, and indicates the management platform 400 to create a blockchain network 300 on the blockchain platform 1, to create a consortium.

Step 6: The management platform 400 invokes a consortium creation interface of the blockchain platform 1 based on tenant information bound to the user A and the user B, to send the consortium creation request to the blockchain platform 1.

The tenant information may include an AK/SK, and the management platform 400 may invoke the consortium creation interface of the blockchain platform 1 based on the AK/SK.

Step 7: The blockchain platform 1 creates a blockchain node in the tenant space associated with the organization corresponding to the user A, and creates a blockchain node in the tenant space associated with the organization corresponding to the user B, to form a consortium through approval logic.

Step 8: The management platform 400 queries a task status on the blockchain platform 1, and stores the consortium when a task succeeds.

Similar to the organization, the management platform 400 may further abstract a data structure of the consortium for storage. The data structure of the consortium includes a consortium identifier (UnionID), a platform type (OemType), and an organization list (denoted as Orgs). Further, refer to the data structure of the consortium shown in Table 2. The data structure of the consortium further includes one or more of a consortium leader, a service chain identifier (denoted as UID), and a service chain name.

**Table 2 Data structure of a consortium**

| Field included in a consortium | Data type | Field description |
|---|---|---|
| ID | int | SEQ |
| UID | string | Service chain ID |
| UnionID | string | Consortium ID |
| CreatorOrg | string | Consortium leader |
| Name | string | Service chain name |
| OemType | string | Platform type |
| Orgs | [] string | Organization list |

The ID in the field included in the consortium refers to an internal ID allocated by the management platform 400, and may generally be a sequence number (sequence, SEQ). The UID refers to an operation and maintenance chain ID. The UnionID refers to a consortium ID. The CreatorOrg refers to a consortium leader, which is specifically an organization that creates the consortium.

The foregoing steps 6 to 8 are an implementation in which the management platform 400 invokes the processing interface of the resource space to execute corresponding service logic. In another possible implementation in embodiments of this application, the management platform 400 may also invoke a processing interface of another resource space, to perform corresponding service logic. Details are shown in steps 9 to 12.

Step 9: The client 100 generates a consortium creation instruction in response to a consortium creation operation triggered by the user C, and sends the consortium creation instruction to the server 200.

The consortium creation instruction includes a user identifier of the user D, and the consortium creation instruction is used to create a consortium in which an organization corresponding to the user C and an organization corresponding to the user D participate as consortium participants.

Step 10: The server 200 invokes a consortium creation interface of the management platform 400, and sends a consortium creation request to the management platform 400.

A consortium creation interface of the management platform 400 is a standard interface. An interface parameter of the consortium creation interface includes oemType. In the example in FIG. 4, oemType may be a blockchain platform 2, and indicates the management platform 400 to create a blockchain network 300 on the blockchain platform 2, to create a consortium. The blockchain platform 2 may be an offline blockchain platform, or another cloud platform.

Step 11: The management platform 400 invokes a consortium creation interface of the blockchain platform 2 based on tenant information bound to the user C and the user D, to send the consortium creation request to the blockchain platform 2.

Step 12: The blockchain platform 2 creates a blockchain node in a physical resource set C associated with the organization corresponding to the user A, and creates a blockchain node in a physical resource set D associated with the organization corresponding to the user B, to achieve a consortium through approval logic.

The foregoing steps 4 to 7 and steps 9 to 12 are respectively creating consortiums on different blockchain platforms. In some possible implementations, one or more consortiums may be created on one blockchain platform. This is not limited in this embodiment.

Step 12: The management platform 400 returns the information about the consortiums managed by the management platform 400 through a query interface.

Specifically, the management platform 400 may return, in a unified format through the query interface, the information about the consortiums managed by the management platform 400. For example, the management platform 400 may return a consortium identifier UnionID and an organization identifier OrgCode of an organization in the consortium.

The embodiment shown in FIG. 4 is described by using an example in which the management platform 400 invokes the consortium creation interface to execute service logic of creating the consortium, and invokes the query interface to execute service logic of querying the consortium. In another possible implementation in embodiments of this application, the management platform 400 may further invoke a consortium joining interface of the resource space to create a blockchain node in the resource space, to execute service logic of joining a consortium; invoke a consortium exit interface of the resource space to reclaim a blockchain node from the resource space, to execute service logic of exiting a consortium; or invoke a consortium deletion interface of the resource space to reclaim a blockchain node from the resource space, to execute service logic of deleting a consortium.

In this embodiment, the management platform 400 is established based on a multi-tenant model of a cloud system, to fully utilize elasticity, stability, and flexibility of cloud computing. The user can maintain a tenant resource, to perform scaling at will and facilitate chaining. In addition, the management platform 400 registers, for each user, an organization with a consistent data structure, and binds the organization to resource space, for example, tenant space corresponding to an on-cloud user or a physical resource set corresponding to an off-cloud user, corresponding to a user type, to execute corresponding service logic through a processing interface of the resource space. In this way, a blockchain network deployed on the cloud and a blockchain network deployed off the cloud can be managed in a unified manner, thereby reducing operation and maintenance costs.

FIG. 4 describes an example of a process of creating a consortium. The following describes an example of establishing a blockchain network 300. The blockchain network 300 deployed off the cloud may be usually established in a private chain mode, and the blockchain network 300 deployed on the cloud may have a plurality of chain creation modes. In embodiments of this application, a mapping model between a plurality of service processes and the blockchain network 300 deployed on the cloud is abstracted, to provide a multi-modal service chain management capability.

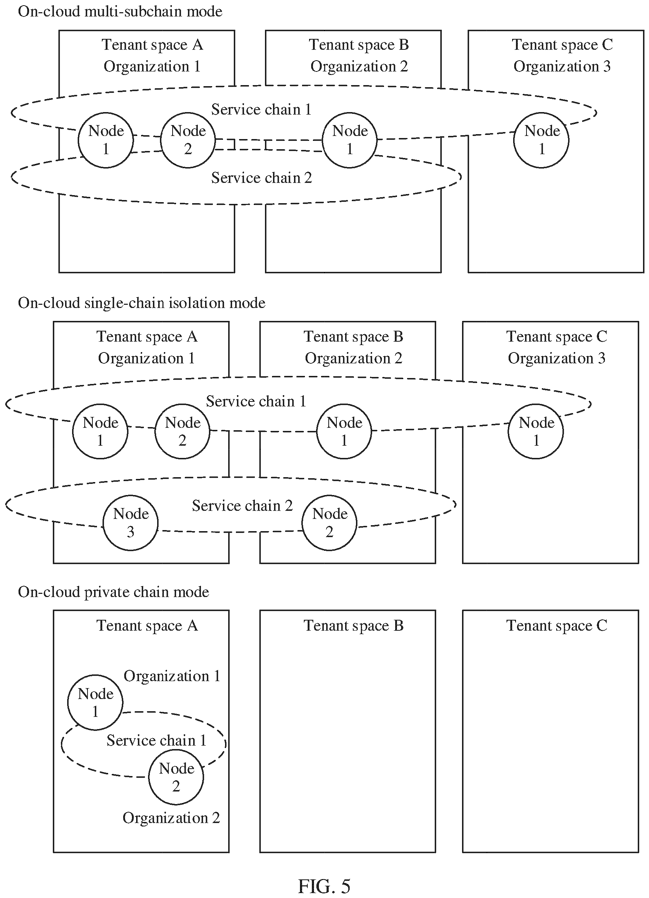

Refer to a schematic diagram of a chain creation mode of an on-cloud blockchain network shown in FIG. 5. A management platform 400 may create a plurality of service chains, and at least two service chains in the plurality of service chains have a shared node, for example, a peer 1 and a peer 2 in tenant space A, or a peer 1 in tenant space B. A chain creation mode in which the management platform 400 creates, in a plurality of tenant spaces of the cloud platform, a plurality of service chains having a shared node is also referred to as an on-cloud multi-subchain mode.

In some embodiments, the management platform 400 may also create a plurality of service chains that do not have a shared node. As shown in FIG. 5, a management platform 400 may create a service chain 1 in tenant space A, tenant space B, and tenant space C, and create a service chain 2 in the tenant space A and the tenant space B. The service chain 1 includes peer nodes such as a peer 1 and a peer 2 in the tenant space A, and peer nodes such as a peer 1 in the tenant space B and a peer 1 in the tenant space C. The service chain 2 includes peer nodes such as a peer 3 in the tenant space A and a peer 2 in the tenant space B. A chain creation mode in which the management platform 400 creates, in the plurality of tenant spaces of the cloud platform, the plurality of service chains that do not have a shared node is also referred to as an on-cloud single-chain isolation mode.

In some other embodiments, the management platform 400 may also create a single service chain, and the service chain is an on-cloud private chain. As shown in FIG. 5, a management platform 400 may create the service chain 1 in the tenant space A, and the service chain includes the peer nodes such as the peer 1 and the peer 2 in the tenant space A. A chain creation mode in which the management platform 400 creates, in the single tenant space of the cloud platform, the single service chain is also referred to as an on-cloud private chain mode.

On the premise that a user request data structure remains unchanged, the management platform 400 may establish blockchain networks in different deployment manners by changing a chain creation mode parameter createMode. Specifically, the management platform 400 may obtain the chain creation mode parameter, and create one or more service chains based on the chain creation mode parameter. This method fully encapsulates a bottom-layer chain creation process, shields a kernel structure difference, implements fast service chain creation, and reduces operation and maintenance costs.

The chain creation mode parameter may be configured based on a trust relationship between users. For users with a weak trust relationship, when the users function as consortium participants, the users can map the consortium participants to different tenant space to form a consortium. A chain creation manner of the consortium may include: using a same blockchain instance/organization/node as an inviter to establish a multi-chain consortium, to implement a multi-subchain consortium mode in which a resource can be reused; and using different blockchain instances/organizations/nodes of a same tenant as an inviter to establish a plurality of single-chain consortiums, to implement a single-chain isolation consortium mode in which a resource cannot be reused. Users with a trust relationship can be deployed in the same tenant space. The participants are mapped to organizations in a private chain and nodes with a same owner. A private chain is established between the participants.

In some possible implementations, the management platform 400 may further abstract a data structure of a service chain (denoted as BusiChain) and a data structure of a blockchain (BlockChain). The following separately describes the data structure of the service chain and the data structure of the blockchain by using examples.

Refer to the data structure of the service chain shown in Table 3, the data structure of the service chain includes a consortium ID, a service chain name, an organization list, and a blockchain list. Optionally, the data structure of the service chain may further include one or more of a consortium leader and a platform type.

**Table 3 Data structure of a service chain**

| Field included in a service chain | Data type | Field description |
|---|---|---|
| ID | int | SEQ |
| UnionID | string | Consortium ID |
| CreatorOrg | string | Consortium leader |
| Name | string | Service chain name |
| OemType | string | Platform type |
| Orgs | []string | Organization list |
| BlockChain | []BlockChain | Blockchain list |

Refer to the data structure of the blockchain shown in Table 4. The data structure of the blockchain includes an external ID of a blockchain (denoted as ExternalID), a blockchain list (denoted as BlockChains), and blockchain configuration information (denoted as BlockSpec). The blockchain configuration information may include information such as a consensus algorithm. Optionally, the data structure of the blockchain further includes one or more of other blockchain information (denoted as ExtraInfo), a service chain name, a platform type, an organization list, and physical resource information.

**Table 4 Data structure of a blockchain**

| Field included in an organization | Data type | Field description |
|---|---|---|
| ID | int | SEQ |
| ExternalID | string | External ID of a blockchain |
| ExtraInfo | string | Other blockchain information |

| Name | string | Service chain name |
|---|---|---|
| CloudType | string | Platform type |
| Orgs | []string | Organization list |
| InfraSpec | InfraSpec | Physical resource information |
| BlockSpec | BlockSpec | Blockchain configuration information, such as a consensus algorithm |

In some possible implementations, the resource space associated with the organization may be from a heterogeneous blockchain platform. The management platform 400 may further receive a platform registration request, and register a standard interface of the heterogeneous blockchain platform through a platform registration interface, to implement unified management of heterogeneous chains on the heterogeneous blockchain platform.

For blockchain networks with different structures, models and chain creation processes of the blockchain networks are different. For example, a kernel of a blockchain network such as Ethereum or Fabric has a dedicated concept such as an account, fuel consumption, and a channel, and a kernel of another blockchain network such as Quorum does not have the foregoing dedicated concept. For another example, different blockchain networks also have differences in whether to support a subchain, whether to support authentication approval, and whether to support enabling of a whitelist. Therefore, the management platform may register a standard interface of the heterogeneous blockchain platform, to implement unified management of heterogeneous chains on the blockchain platform.

For a blockchain platform that has the management plane interface, the management platform 400 may map the management plane interface to a standard interface in an interface mapping manner. Specifically, the management platform 400 may receive the platform registration request, and obtain the standard interface corresponding to the management plane interface, to register the standard interface of the heterogeneous blockchain platform. In this way, secondary development is not required, and efficiency is improved. For a blockchain platform without a management plane interface, the management platform 400 may develop a standard interface for the blockchain platform.

The standard interface may include a network management type, a chain management type, a contract management type, or an operation and operation and maintenance type. The standard interface of the network management type includes one or more of a blockchain network creation interface, a blockchain network deletion interface, a blockchain network joining interface, and a blockchain network exit interface. The standard interface of the chain management type includes one or more of a chain creation interface, a chain deletion interface, a chain joining interface, and a chain exit interface. The standard interface of the contract management type includes one or more of a contract deployment interface, a contract upgrade interface, and a contract deletion interface. The standard interface of operation and operation and maintenance type includes one or more of an account summary query interface, a transaction list query interface, a transaction query interface, a block list query interface, a monitoring query interface, a blockchain network detail query interface, a blockchain node query interface, and a chain information query interface.

The standard interface includes a general data structure, for example, a data structure of a service chain or a data structure of a blockchain. Special data structures can be encapsulated into extraInfo in a json string mode. After being registered, each blockchain platform can seamlessly access the management platform 400 to execute service logic.

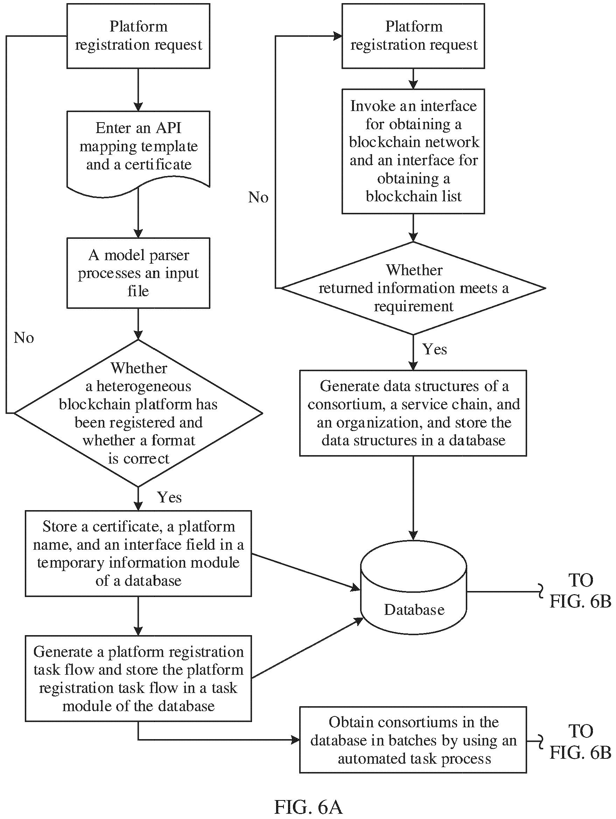

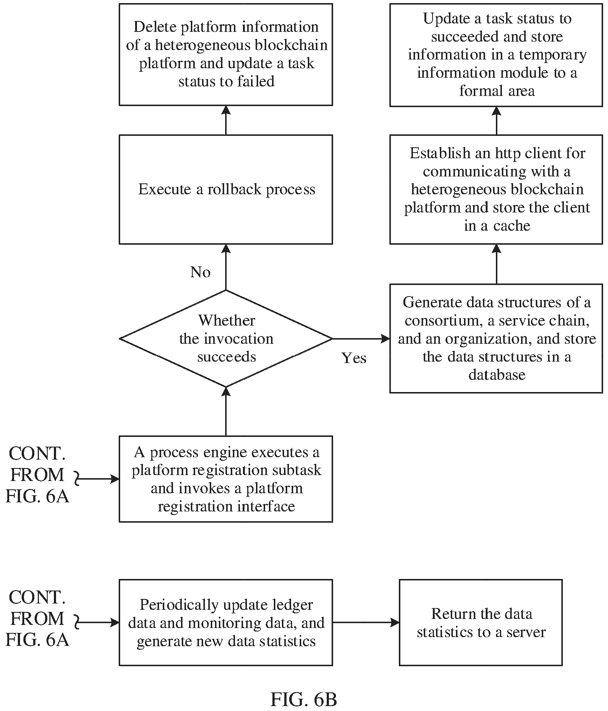

Refer to a schematic diagram of a registration procedure of a blockchain platform shown in FIG. 6A and FIG. 6B. During registration of a heterogeneous blockchain platform, platform information (a certificate key, an IP port, and an API file) is registered with the management platform 400 through a platform registration interface, and a blockchain platform that has a management plane interface may be registered in an interface mapping manner.

Specifically, the heterogeneous blockchain platform may send a platform registration request, and the management platform 400 obtains, based on the platform registration request, the platform information entered by the user, where the platform information includes the API file. The API file may include an original API file and an API mapping template.

The original API file includes one or more of the following: a path (for example, user-defined url), a method (for example, get, post, put and delete), a parameter (for example, interface parameter, distinguishing path parameter, body parameter, and so on, and a default value needs to be marked), a response (returned by an interface), and a definition (structure definition).

The API mapping template includes a request url (including a path parameter and a query parameter), a body parameter, response mapping template, and mapping between a management plane interface and a standard interface.

Further, the platform information may further include a certificate, a key, an IP address, a port number, and the like. Then, the management platform 400 may process, by using a template parser, the platform information such as the API mapping template and the certificate that are entered by the user, and then the management platform 400 determines whether the heterogeneous blockchain platform has been registered and whether a format is correct. If the heterogeneous blockchain platform has been registered and the format is correct, the management platform 400 may store one or more of the certificate, the platform name, and the interface field to a database. If the heterogeneous blockchain platform has not been registered and the format is not correct, the management platform 400 returns to platform registration.

The management platform 400 may perform mapping according to the following mapping rules when registering with the platform through the mapping management plane interface: The mapping interface complies with an RESTFUL specification. An interface including a body parameter supports interface mapping whose body parameter format is application/json. An interface in a form format cannot be mapped. An interface whose return value is a binary flow cannot be mapped. A field that needs to be returned in a return value of the standard interface needs to be returned, and mapping field types needs to be consistent.

In some possible implementations, when the management platform 400 needs to store the certificate, the platform name, and the interface field, the management platform 400 may first store the certificate, the platform name, and the interface field in a temporary information module of the database; and then generate a platform registration task flow, and when the task succeeds, store the platform registration task flow in a task module of the database. A process engine of the management platform 400 may obtain the platform registration task flow from the database, and execute a platform registration subtask. The management platform 400 may invoke the platform registration interface of the heterogeneous blockchain platform, to register the heterogeneous blockchain platform, generate data structures of a consortium, a service chain, and an organization, and store the data structures in a database. The management platform 400 may further establish a hypertext transfer protocol (Hypertext Transfer Protocol, HTTP) client for communicating with the heterogeneous blockchain platform, and store the client in a cache. Then, the management platform 400 may update a task status to succeeded, and store the certificate, the platform name, and the interface field in the temporary information module in the task module (a formal area). Correspondingly, an interface processor may be implemented inside the management platform 400. When the standard interface is invoked, the management platform 400 may parse an interface field by using a template parser or a method such as reflection, and automatically convert an interface invoking format. The process engine executes a task, and invokes different bottom-layer interfaces based on a platform type, to schedule a bottom-layer heterogeneous blockchain platform.

Further, the management platform 400 may further obtain consortiums in the database in batches by using an automated task process, to periodically update ledger data and monitoring data, generate new data statistics, and then return the statistics to the server 200.

The foregoing describes a registration process of the heterogeneous blockchain platform. In some possible implementations, the heterogeneous blockchain platform may further register with an existing blockchain network. Specifically, the heterogeneous blockchain platform may send a platform registration request, where the registration request includes a blockchain identifier. The management platform 400 invokes an interface for obtaining a blockchain list and an interface for obtaining a blockchain network, and determines whether returned information meets a requirement. If the returned information meets the requirement, the heterogeneous blockchain platform generates a consortium, a service, and an organization, and stores the consortium, the service, and the organization in the database. If the returned information does not meet the requirement, the heterogeneous blockchain platform returns to platform registration.

In the method, the management platform 400 abstracts a common model and a function module of the blockchain by referring to core architectures of a plurality of types of blockchain networks 300, formulates an access interface that complies with the RESTful interface specification, and manages the heterogeneous blockchain network in a one-stop manner through a unified access interface. When registering with the heterogeneous blockchain platform, the management platform 400 supports registration based on an interface, a certificate, and an access domain name, and supports uploading of a network ID to an existing blockchain network (an existing blockchain network), to interconnect with the existing blockchain network. In this way, repeated construction and long-period service reconstruction of the blockchain platform can be avoided, and all services and resources of a user can be maintained, scheduled, and monitored in a unified manner.

To make the technical solutions of this application clearer and easier to understand, the following describes the blockchain network management method in embodiments of this application with reference to a government scenario.

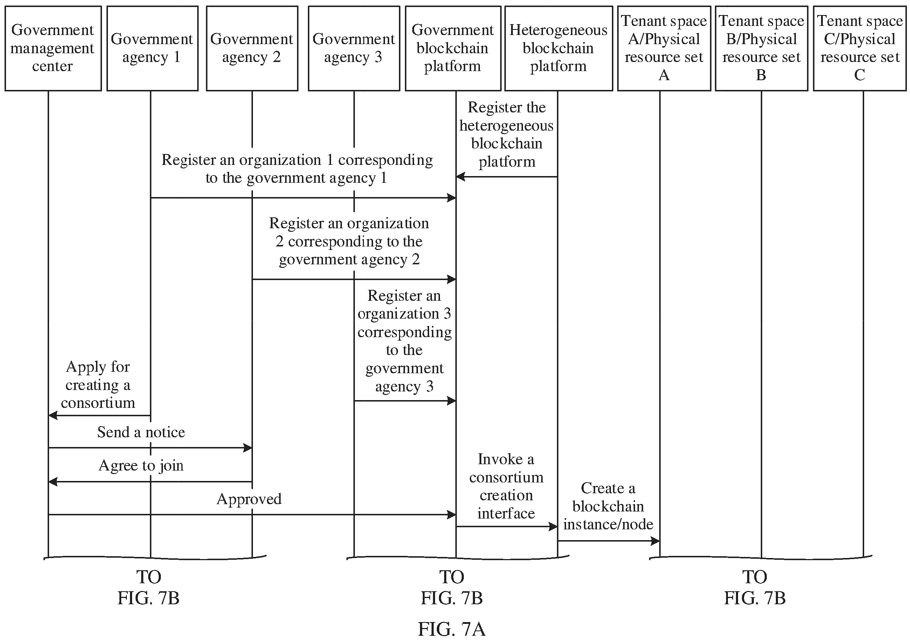

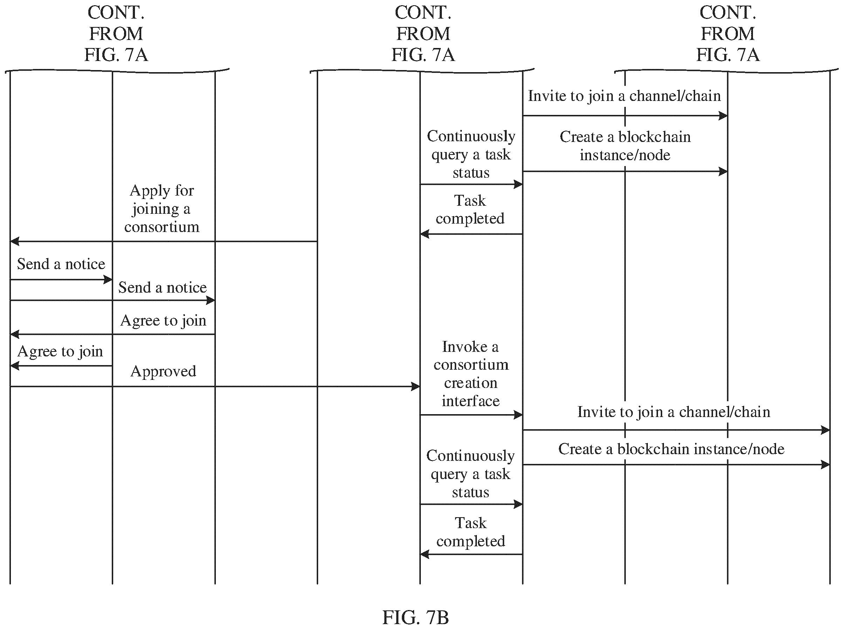

Refer to a flowchart of a blockchain network management method shown in FIG. 7A and FIG. 7B. The method is described by using an example of creating a consortium service and joining a consortium service in a government scenario.

Specifically, a heterogeneous blockchain platform invokes a platform registration interface to trigger platform registration, and sends a platform registration request to a government blockchain platform (a management platform 400 in the government scenario). The government blockchain platform registers the heterogeneous blockchain platform with the government blockchain platform in response to the platform registration request. Similarly, a government agency 1 to a government agency 3 may invoke a user registration interface to trigger user registration, and send a user registration request to the government blockchain platform. The government blockchain platform responds to the user registration request, and registers an organization 1 corresponding to the government agency 1, an organization 2 corresponding to the government agency 2, and an organization 3 corresponding to the government agency 3.

The government agency 1 may trigger a consortium creation operation, and send a consortium creation command to a government management center (a server 200 in the government scenario). The government management center may send a notification to the government agency 2. When the government management center receives a response indicating that the government agency 2 agrees to join a consortium, the government management center may send, to the government blockchain platform, an approval result indicating that approval is passed. In this way, the government blockchain platform may invoke a consortium creation interface to send a consortium creation request to the heterogeneous blockchain platform. The heterogeneous blockchain platform may create a blockchain instance/node in tenant space A or a physical resource set A, and create a blockchain instance/node in tenant space B or a physical resource set B. The tenant space A or the physical resource set A is resource space associated with the organization 1. Similarly, the tenant space B or the physical resource set B is resource space associated with the organization 2. In some possible implementations, the heterogeneous blockchain platform may further invite the tenant space B or the physical resource set B to join a channel or a chain. Then, the government blockchain platform can continuously query a task status until a task is complete.

Further, the government agency 3 may further trigger a consortium joining operation, and send a consortium joining instruction to the government management center. The government management center may send a notification to the government agency 1 and the government agency 2. When the government management center receives a response, from the government agency 1, indicating to allow the government agency 3 to join the consortium and a response, from the government agency 2, indicating to allow the government agency 3 to join the consortium, the government management center may send an approval result indicating that the approval is passed to the government blockchain platform. In this way, the government blockchain platform may invoke the consortium joining interface to send the consortium joining request to the heterogeneous blockchain platform. The heterogeneous blockchain platform may create a blockchain instance/node in tenant space C or a physical resource set C. The tenant space C or the physical resource set C is resource space associated with the organization 3. In some possible implementations, the heterogeneous blockchain platform may further invite the tenant space C or the physical resource set C to join a channel or a chain. For example, before creating a blockchain instance/node in the tenant space C or the physical resource set C, the heterogeneous blockchain platform may first invite the tenant space C or the physical resource set C to join the channel or the chain. Then, the government blockchain platform can continuously query a task status until a task is complete.

The government blockchain platform may perform a data update or rollback operation based on a task execution result. For example, if the task is successfully executed (that is, the task is completed), the government blockchain platform may perform data update. If the task fails to be executed, the government blockchain platform may perform data rollback.

FIG. 7A and FIG. 7B describe a service process of creating a consortium and joining a consortium. For other service processes such as creating a service chain, joining a service chain, deploying a contract, and deleting a consortium, refer to the foregoing related content description. Details are not described herein again.

The method may provide a capability of centrally managing a blockchain network deployed on a cloud and a blockchain network deployed off a cloud, a capability of uniformly managing a heterogeneous blockchain network, and a capability of managing an existing blockchain network, to implement centralized operation or operation and maintenance on blockchain networks in different deployment manners and different architectures. In addition, the method may provide a centralized operation and maintenance management visualization system, to facilitate tenant management, alarm monitoring, procedure approval, and the like. The method further supports one-click deployment of a blockchain network, and full lifecycle management performed on the blockchain network. Node scaling is easy, and costs of maintaining the blockchain network are greatly reduced. In addition, the method may further provide various government service mapping manners on a cloud, to simplify a chaining procedure of a government service.

Based on the blockchain network management method provided in embodiments of this application, embodiments of this application further provide the foregoing blockchain network management platform 400. The following describes, with reference to the accompanying drawings, the blockchain network management platform 400 provided in embodiments of this application.

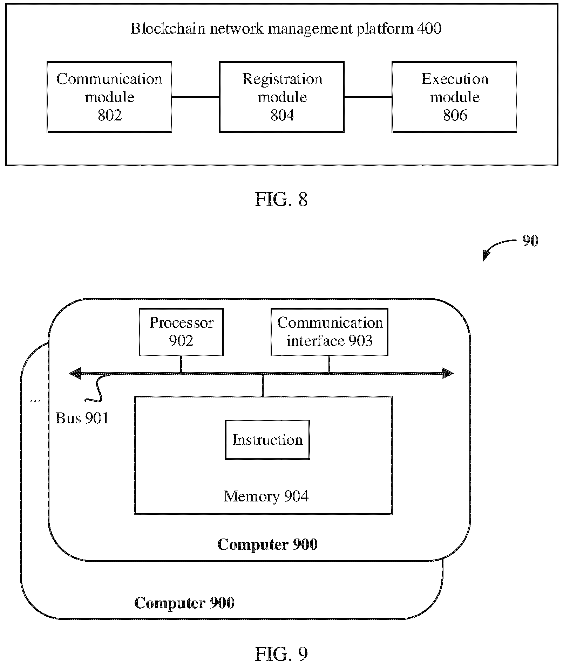

Refer to a diagram of a structure of a blockchain network management platform 400 shown in FIG. 8, the management platform 400 includes:
a communication module 802, configured to receive a user registration request, where the user registration request includes a user type of a user, and the user type is determined based on a deployment manner of a blockchain network managed by the user;
a registration module 804, configured to register a corresponding organization for the user based on the user registration request, where the organization is associated with resource space corresponding to the user type; and
an execution module 806, configured to invoke a processing interface of the resource space to execute corresponding service logic.

In some possible implementations, the user type includes an on-cloud user, and resource space corresponding to the on-cloud user includes tenant space.

In some possible implementations, the execution module 806 is specifically configured to:
invoke a service chain creation interface of the tenant space to create a service chain.

In some possible implementations, the execution module 806 is specifically configured to:
create a plurality of service chains, where at least two of the plurality of service chains have a shared node; or
create a plurality of service chains, where the plurality of service chains do not have a shared node; or
create a single service chain, where nodes of the service chain are located in same tenant space.

In some possible implementations, the execution module 806 is specifically configured to:
obtain a chain creation mode parameter; and
create one or more service chains based on the chain creation mode parameter.

In some possible implementations, the chain creation mode parameter is configured based on a trust relationship between the users.

In some possible implementations, the user type includes an off-cloud user, and resource space corresponding to the off-cloud user includes a physical resource set.

In some possible implementations, the execution module 806 is specifically configured to:
invoke a consortium creation interface of the resource space to create a blockchain node in the resource space, to create a consortium; or
invoke a consortium joining interface of the resource space to create a blockchain node in the resource space, to join a consortium; or
invoke a consortium exit interface of the resource space to reclaim a blockchain node in the resource space, to exit a consortium; or
invoke a consortium deletion interface of the resource space to reclaim a blockchain node in the resource space, to delete a consortium.

In some possible implementations, the resource space is from a heterogeneous blockchain platform, and the communication module is further configured to:
receive a platform registration request; and
the registration module is further configured to:
   register a standard interface of the heterogeneous blockchain platform through a platform registration interface.

In some possible implementations, the resource space is from a heterogeneous blockchain platform, the heterogeneous blockchain platform has a management plane interface, and the communication module is further configured to:
receive a platform registration request; and
the registration module is further configured to:
   obtain a standard interface corresponding to the management plane interface, to register a standard interface of the heterogeneous blockchain platform.

In some possible implementations, the blockchain network management platform provides a service interface, and the execution module is specifically configured to:
execute the corresponding service logic in response to invocation of the service interface by a service server.

The blockchain network management platform 400 according to embodiments of this application may correspondingly perform the method described in embodiments of this application, and the foregoing and other operations and/or functions of the modules/units of the blockchain network management platform 400 are separately used to implement corresponding procedures of the methods in the embodiment shown in FIG. 3. For brevity, details are not described herein again.

Embodiments of this application further provide a computer cluster. The computer cluster includes at least one computer, and any one of the at least one computer may be from a cloud environment or an edge environment, or may be a terminal device. The computer cluster is specifically configured to implement a function of the blockchain network management platform 400 in the embodiment shown in FIG. 8.

FIG. 9 provides a diagram of a structure of a computer cluster. As shown in FIG. 9, a computer cluster 90 includes a plurality of computers 900, and the computer 900 includes a bus 901, a processor 902, a communication interface 903, and a memory 904. The processor 902, the memory 904, and the communication interface 903 communicate with each other by using the bus 901.

The bus 901 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one thick line is used to represent the bus in FIG. 9, but this does not mean that there is only one bus or only one type of bus.

The processor 902 may be any one or more of processors such as a central processing unit (central processing unit, CPU), a graphics processing unit (graphics processing unit, GPU), a microprocessor (micro processor, MP), or a digital signal processor (digital signal processor, DSP).

The communication interface 903 is configured to communicate with the outside. For example, the communication interface 903 is configured to receive a user registration request, or receive a platform registration request.

The memory 904 may include a volatile memory (volatile memory), for example, a random access memory (random access memory, RAM). The memory 904 may alternatively include a non-volatile memory (non-volatile memory), for example, a read-only memory (read-only memory, ROM), a flash memory, a hard disk drive (hard disk drive, HDD), or a solid state drive (solid state drive, SSD).

The memory 904 stores computer-readable instructions, and the processor 902 executes the computer-readable instructions, so that the computer cluster 90 performs the foregoing blockchain network management method (or implements the functions of the foregoing management platform 400).

Specifically, in a case in which the embodiment of the management platform 400 shown in FIG. 8 is implemented, and functions of modules such as the communication module 802, the registration module 804, and the execution module 806 of the management platform 400 described in FIG. 8 are implemented by using software, software or program code required for executing the functions of the modules in FIG. 8 may be stored in at least one memory 904 in the computer cluster 90. At least one processor 902 executes the program code stored in the memory 904, so that the computer cluster 90 performs the foregoing blockchain network management method.

Embodiments of this application further provide a computer-readable storage medium. The computer-readable storage medium may be any usable medium that can be stored by a computer, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid state disk), or the like. The computer-readable storage medium includes instructions, and the instructions instruct a computer or a computer cluster to perform the foregoing blockchain network management method.

Embodiments of this application further provide a computer program product. The computer program product includes one or more computer instructions. When the computer instructions are loaded and executed on the computer, the procedure or functions according to embodiments of this application are all or partially generated. The computer instructions may be stored in a computer-readable storage medium, or may be transmitted from one computer-readable storage medium to another computer-readable storage medium. For example, the computer instructions may be transmitted from a website, a computer, or a data center to another website, computer, or data center in a wired (for example, a coaxial cable, an optical fiber, or a digital subscriber line (DSL)) or wireless (for example, infrared, radio, or microwave) manner. The computer program product may be a software installation package. When any one of the foregoing blockchain network management methods needs to be used, the computer program product may be downloaded and executed on a computer or a computer cluster.

Descriptions of procedures or structures corresponding to the accompanying drawings have respective focuses. For a part that is not described in detail in a procedure or structure, refer to related descriptions of other procedures or structures.

## Claims

1. A blockchain network management method, applied to a blockchain network management platform, wherein the method comprises:
receiving a user registration request, wherein the user registration request comprises a user type of a user, and the user type is determined based on a deployment manner of a blockchain network managed by the user;
registering a corresponding organization for the user based on the user registration request, wherein the organization is associated with resource space corresponding to the user type; and
invoking a processing interface of the resource space to execute corresponding service logic.

2. The method according to claim 1, wherein the user type comprises an on-cloud user, and resource space corresponding to the on-cloud user comprises tenant space.

3. The method according to claim 2, wherein the invoking a processing interface of the resource space to execute corresponding service logic comprises:
invoking a service chain creation interface of the tenant space to create a service chain.

4. The method according to claim 3, wherein the creating a service chain comprises:
creating a plurality of service chains, wherein at least two of the plurality of service chains have a shared node; or
creating a plurality of service chains, wherein the plurality of service chains do not have a shared node; or
creating a single service chain, wherein nodes of the service chain are located in same tenant space.

5. The method according to claim 3 or 4, wherein the creating a service chain comprises:
obtaining a chain creation mode parameter; and
creating one or more service chains based on the chain creation mode parameter.

6. The method according to claim 5, wherein the chain creation mode parameter is configured based on a trust relationship between users.

7. The method according to claim 1, wherein the user type comprises an off-cloud user, and resource space corresponding to the off-cloud user comprises a physical resource set.

8. The method according to claim 1, 2, or 7, wherein the invoking a processing interface of the resource space to execute corresponding service logic comprises:
invoking a consortium creation interface of the resource space to create a blockchain node in the resource space, to create a consortium; or
invoking a consortium joining interface of the resource space to create a blockchain node in the resource space, to join a consortium; or
invoking a consortium exit interface of the resource space to reclaim a blockchain node in the resource space, to exit a consortium; or
invoking a consortium deletion interface of the resource space to reclaim a blockchain node from the resource space, to delete a consortium.

9. The method according to any one of claims 1 to 8, wherein the resource space is from a heterogeneous blockchain platform, and the method further comprises:
receiving a platform registration request; and
registering a standard interface of the heterogeneous blockchain platform through a platform registration interface.

10. The method according to any one of claims 1 to 8, wherein the resource space is from a heterogeneous blockchain platform, the heterogeneous blockchain platform has a management plane interface, and the method further comprises:
receiving a platform registration request; and
obtaining a standard interface corresponding to the management plane interface, to register a standard interface of the heterogeneous blockchain platform.

11. The method according to any one of claims 1 to 10, wherein the blockchain network management platform provides a service interface, and the executing corresponding service logic comprises:
executing the corresponding service logic in response to invocation of the service interface by a service server.

12. A blockchain network management platform, wherein the platform comprises:
a communication module, configured to receive a user registration request, wherein the user registration request comprises a user type of a user, and the user type is determined based on a deployment manner of a blockchain network managed by the user;
a registration module, configured to register a corresponding organization for the user based on the user registration request, wherein the organization is associated with resource space corresponding to the user type; and
an execution module, configured to invoke a processing interface of the resource space to execute corresponding service logic.

13. The platform according to claim 12, wherein the user type comprises an on-cloud user, and resource space corresponding to the on-cloud user comprises tenant space.

14. The platform according to claim 13, wherein the execution module is specifically configured to:
invoke a service chain creation interface of the tenant space to create a service chain.

15. The platform according to claim 14, wherein the execution module is specifically configured to:
create a plurality of service chains, wherein at least two of the plurality of service chains have a shared node; or
create a plurality of service chains, wherein the plurality of service chains do not have a shared node; or
create a single service chain, wherein nodes of the service chain are located in same tenant space.

16. The platform according to claim 14 or 15, wherein the execution module is specifically configured to:
obtain a chain creation mode parameter; and
create one or more service chains based on the chain creation mode parameter.

17. The platform according to claim 16, wherein the chain creation mode parameter is configured based on a trust relationship between users.

18. The platform according to claim 12, wherein the user type comprises an off-cloud user, and resource space corresponding to the off-cloud user comprises a physical resource set.

19. The platform according to claim 12, 13, or 18, wherein the execution module is specifically configured to:
invoke a consortium creation interface of the resource space to create a blockchain node in the resource space, to create a consortium; or
invoke a consortium joining interface of the resource space to create a blockchain node in the resource space, to join a consortium; or
invoke a consortium exit interface of the resource space to reclaim a blockchain node from the resource space, to exit a consortium; or
invoke a consortium deletion interface of the resource space to reclaim a blockchain node from the resource space, to delete a consortium.

20. The platform according to any one of claims 12 to 19, wherein the resource space is from a heterogeneous blockchain platform, and the communication module is further configured to:
receive a platform registration request; and
the registration module is further configured to:
register a standard interface of the heterogeneous blockchain platform through a platform registration interface.

21. The platform according to any one of claims 12 to 19, wherein the resource space is from a heterogeneous blockchain platform, the heterogeneous blockchain platform has a management plane interface, and the communication module is further configured to:
receive a platform registration request; and
the registration module is further configured to:
obtain a standard interface corresponding to the management plane interface, to register a standard interface of the heterogeneous blockchain platform.

22. The platform according to any one of claims 12 to 21, wherein the blockchain network management platform provides a service interface, and the execution module is specifically configured to:
execute the corresponding service logic in response to invocation of the service interface by a service server.

23. A computer cluster, wherein the computer cluster comprises at least one computer, the at least one computer comprises at least one processor and at least one memory, the at least one memory stores computer-readable instructions, and the at least one processor executes the computer-readable instructions, so that the computer cluster performs the method according to any one of claims 1 to 11.

24. A computer-readable storage medium, comprising computer-readable instructions, wherein the computer-readable instructions are used to implement the method according to any one of claims 1 to 11.

25. A computer program product, comprising computer-readable instructions, wherein the computer-readable instructions are used to implement the method according to any one of claims 1 to 11.
